# EUROPÄISCHE PATENTANMELDUNG

(11) **EP 2 604 919 A1**
(43) Veröffentlichungstag der Anmeldung: **19.06.2013**
(21) Anmeldenummer: 11192971.7
(22) Anmeldetag: 12.12.2011
(51) Int. Cl.: F23D 17/00, F23R 3/36, F23D 14/24, F23D 14/58

(54) **Brennstoffdüse für zwei Brennstoffe**

(71) Anmelder: Siemens Aktiengesellschaft, 80333 München (DE)
(72) Erfinder: Deiss, Olga, 40627 Düsseldorf (DE); Köstlin, Berthold, 47057 Duisburg (DE); van Kampen, Jaap, 6042 AR Roermond (NL)

(57) **Zusammenfassung**

Eine Brennstoffdüse (2) für zwei Brennstoffe, mit einem Innenrohr (5) mit radial ausgerichteten Austrittsöffnungen für einen ersten Brennstoff und mit einem das Innenrohr (5) umgebenden Außenrohr (6) mit axial ausgerichteten Austrittsöffnungen (10) für einen zweiten Brennstoff, umfasst eine axial verlaufende Nut an einer Außenfläche des Innenrohrs (5) und einen in die Nut als Verdrehsicherung eingreifenden Vorsprung des Außenrohrs (6), der zwischen zwei axialen Austrittsöffnungen (10) angeordnet ist.

## Beschreibung

Die Erfindung betrifft eine Brennstoffdüse für zwei Brennstoffe für eine Gasturbine und einen Brenner, insbesondere einen Strahlbrenner für eine Gasturbine.

Für die bessere Verfügbarkeit von Brennstoffen und die Nutzung alternativer Brennstoffe in den Gasturbinen wird die Eindüsung unterschiedlicher Brennstoffe kombiniert. Dies geschieht mittels einer doppelten Brennstoffdüse (Dual Fuel Nozzle), die aus zwei ineinander steckenden Rohren besteht. Durch das Außenrohr wird mittels eines Lobe Mixers erster Brennstoff eingedüst. Durch das innere Rohr wird senkrecht zu der Luftströmung (cross in flow) zweiter Brennstoff beigemischt. Für einen stabilen Betrieb ist die Position des Lobe Mixers gegenüber der inneren Düse entscheidend.

Es ist Aufgabe der Erfindung, den Aufbau und den Betrieb einer Gasturbine zu verbessern.

Diese Aufgabe wird mit den Merkmalen der Ansprüche 1, 8 beziehungsweise 10 und 11 gelöst. Vorteilhafte Weiterbildungen der Erfindung sind in den abhängigen Ansprüchen definiert.

Gemäß einem ersten Aspekt der Erfindung umfasst eine Brennstoffdüse für zwei Brennstoffe, mit einem Innenrohr mit radial ausgerichteten Austrittsöffnungen für einen ersten Brennstoff und mit einem das Innenrohr umgebenden Außenrohr mit axial ausgerichteten Austrittsöffnungen für einen zweiten Brennstoff, eine axial verlaufende Nut an einer Außenfläche des Innenrohrs und einen in die Nut als Verdrehsicherung eingreifenden Vorsprung des Außenrohrs, der zwischen zwei axialen Austrittsöffnungen angeordnet ist. Der zweite Brennstoff kann vom gleichen Typ oder identisch mit dem ersten Brennstoff sein. Die Bezeichnungen erster und zweiter Brennstoff sind zur besseren Unterscheidung gewählt und haben nicht unbedingt funktionalen Bezug. Die axial ausgerichteten Austrittsöffnungen des Außenrohres können als sogenannter Lobe Mixer ausgeführt sein, bei dem die Austrittsöffnungen zwischen eingepressten oder im Umfang reduzierten Bereichen des Außenrohrs ausgebildet sind, so dass keulenförmige Injektionsbereiche entstehen.

Die Verdrehsicherung verhindert eine Verdrehung der beiden Düsen und erlaubt so eine dauerhafte stabile Positionierung der beiden Düsen oder Austrittsöffnungen zueinander und einen stabilen Betrieb mit zwei Brennstoffen, wie beispielsweise Erdgas und Synthesegas. Der einfache Aufbau und die einfache Montage erlauben eine kostengünstige Realisierung.

Mehrere Nuten und Vorsprünge können vorgesehen sein. Dies kann die Robustheit und Ausfallsicherheit erhöhen. Es kann vorgesehen sein, dass zwischen allen axialen Austrittsöffnungen Vorsprünge und entsprechende Nuten angeordnet sind.

Die Nut kann kreissegmentförmig ausgebildet sein und der Vorsprung kann eine korrespondierende Rundung aufweisen. Dies kommt der natürlichen Form eines Lobe Mixers entgegen und erlaubt eine einfache Realisierung und gute Integration in bestehende Systeme.

Das Außenrohr kann im Bereich der radialen Austrittsöffnungen radiale Ausnehmungen aufweisen. Diese Ausnehmungen, die zum Beispiel kreissegmentförmig sein können, verhindern, dass aufgrund der thermischen Ausdehnungen im Betrieb die radialen Austrittsöffnungen von dem äußeren Rohr bzw. dem Lobe Mixer verdeckt werden. Die Ausnehmungen können jeweils zwischen zwei axialen Austrittsöffnungen, vorzugsweise in der Mitte, angeordnet sein.

Die axialen Austrittsöffnungen können verdrallt sein und die Nut kann sich von einer axialen Austrittsöffnung bis in eine benachbarte axiale Austrittsöffnung erstrecken. Dieser verdrallte Aufbau wird auch als Twisted Lobe Mixer bezeichnet. Da der Vorsprung des Außenrohrs infolge der Verdrallung sich über einen größeren Umfangsbereich erstreckt, wird die Nut entsprechend vergrößert, um auch in diesem Fall eine optimale Verdrehsicherung zu gewährleisten.

Die axialen Austrittsöffnungen können verdrallt sein und die Nut kann mit identischem oder ähnlichem Drallwinkel wie die axialen Austrittsöffnungen verdrallt sein. So greifen die Nut und Vorsprung auch bei dem Twisted Lobe Mixer Design direkt ineinander.

Eine axiale Positionierung von Innenrohr zu Außenrohr kann mittels einer Rohrverschraubung oder einer ähnlichen Schraubverbindung erfolgen. Bei der axialen Positionierung wird der Abstand zwischen den radialen Austrittsöffnungen und dem Außenrohr bzw. Lobe Mixer eingestellt, um thermische Ausdehnungen im Betrieb auszugleichen.

Gemäß einem zweiten Aspekt der Erfindung umfasst eine Brennstoffdüse für zwei Brennstoffe, mit einem Innenrohr mit radial ausgerichteten Austrittsöffnungen für einen ersten Brennstoff und mit einem das Innenrohr umgebenden Außenrohr mit axial ausgerichteten Austrittsöffnungen für einen zweiten Brennstoff, einen axial verlaufenden Vorsprung an einer Außenfläche des Innenrohrs, der in eine axial ausgerichtete Austrittsöffnung als Verdrehsicherung eingreift. Bei diesem Aufbau ist der Vorsprung an dem Innenrohr angebracht und greift in eine axial ausgerichtete Austrittsöffnung ein. Für bestimmte Anwendungen kann dieser Aufbau einfacher sein. Ansonsten gelten die gleichen Vorteile und Modifikationen wie oben beschrieben.

Mehrere Vorsprünge können vorgesehen sein. Dies kann die Robustheit und Ausfallsicherheit erhöhen. Es kann vorgesehen sein, dass für alle axialen Austrittsöffnungen Vorsprünge vorgesehen sind.

Gemäß einem weiteren Aspekt ist die Erfindung auf einen Brenner, insbesondere einen Strahlbrenner, für eine Gasturbine gerichtet, wobei der Brenner eine wie zuvor beschriebene Brennstoffdüse aufweist. Es gelten die gleichen Vorteile und Modifikationen wie oben beschrieben.

Gemäß noch einem weiteren Aspekt ist die Erfindung auf eine Gasturbine mit einem Brennraum und einer Strömungsrichtung, aufweisend einen wie zuvor beschriebenen Brenner gerichtet. Es gelten die gleichen Vorteile und Modifikationen wie oben beschrieben.

Im Folgenden wird die Erfindung anhand der Zeichnungen näher beschrieben, in denen zeigen:
Figur 1 zeigt eine vereinfachte Darstellung einer Brennstoffdüse gemäß der Erfindung.
Figuren 2 bis 6 zeigen ein erstes Beispiel einer Brennstoffdüse mit Straight Lobe gemäß der Erfindung.
Figuren 7 bis 11 zeigen ein zweites Beispiel einer Brennstoffdüse mit Twisted Lobe gemäß der Erfindung.
Figuren 12 bis 16 zeigt ein drittes Beispiel einer Brennstoffdüse mit Twisted Lobe gemäß der Erfindung.
Figur 17 zeigt einen beispielhaften Montagevorgang einer Brennstoffdüse gemäß der Erfindung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

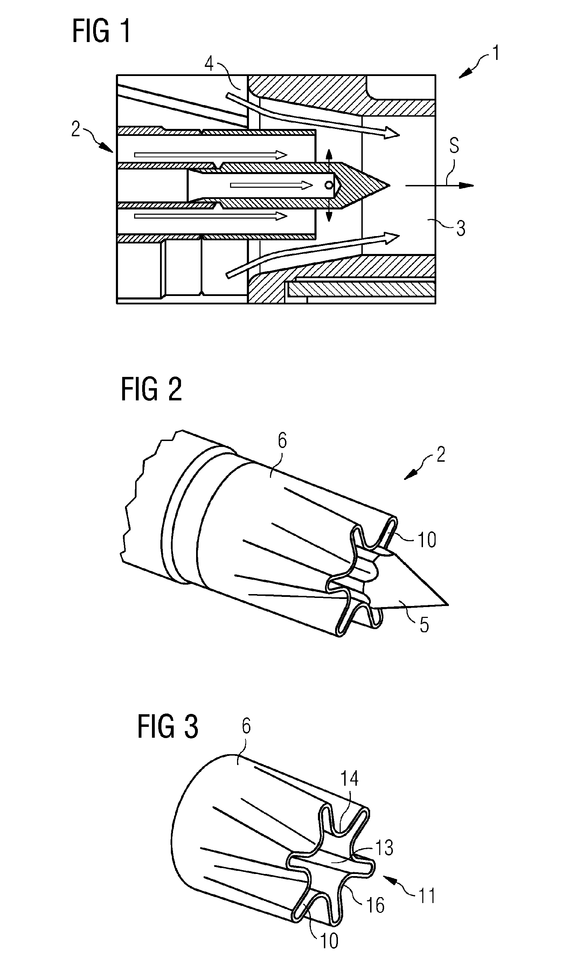

Figur 1 zeigt eine vereinfachte Darstellung eines Teils einer Gasturbine 1 mit einer Brennstoffdüse 2. Mehrere Brennstoffdüsen 2, zum Beispiel zwölf oder sechzehn, sind konzentrisch zu einer Strömungsrichtung S der Gasturbine 1 angeordnet.

Die Brennstoffdüse 2 ist zum gleichzeitigen Eindüsen von zwei Brennstoffen geeignet, zum Beispiel von Erdgas und Synthesegas. Die Brennstoffdüse 2 ist in einen Brennraum oder Vorraum 3 der Gasturbine gerichtet. Eine Lufteinleitung 4 kann die Brennstoffdüse 2 umgeben, so dass stromabwärts oder im Bereich der Brennstoffdüse 2, das heißt in Richtung der Strömungsrichtung S, eine Vermischung des Brennstoffes mit der Luft stattfindet.

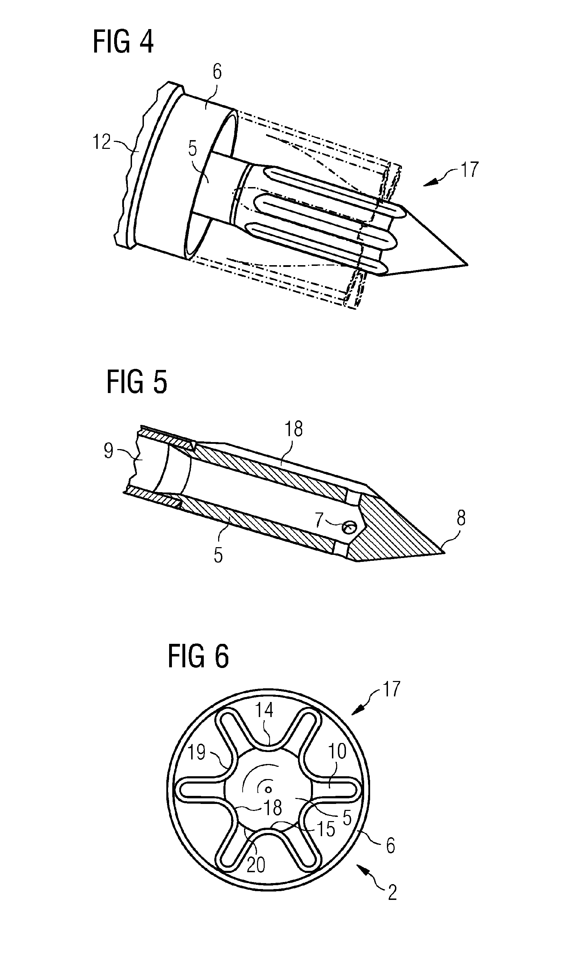

In den Figuren 2 bis 6 ist eine erste Ausführung der Brennstoffdüse 2 detaillierter dargestellt. Die Brennstoffdüse 2 ist vom Typ eines Straight Lobe Mixers und besteht aus einem Innenrohr 5 und einem das Innenrohr 5 umgebenden Außenrohr 6. Die Figuren 2, 4 und 6 zeigen Ansichten der Brennstoffdüse 2 in montiertem Zustand, in den Figuren 3 und 5 sind Außenrohr 6 und Innenrohr 5 getrennt dargestellt.

Das Innenrohr 5 hat radial ausgerichtete Austrittsöffnungen 7 für einen ersten Brennstoff, zum Beispiel Erdgas, die über den Umfang vorzugsweise mit gleichem Abstand zueinander verteilt sind. Hier sind sechs Austrittsöffnungen 7 vorgesehen, je nach Anwendung kann die Anzahl anders gewählt werden.

Die radial ausgerichteten Austrittsöffnungen 7 sind stromaufwärts von einer Düsenspitze 8 angeordnet, in der das Innenrohr 5 endet. Als Innenrohr 5 kann entweder ein auf ein Zuleitungsrohr 9 aufgebrachter Endbereich, der die Düsenspitze 8 und die radial ausgerichteten Austrittsöffnungen 7 umfasst, oder der Endbereich plus Zuleitungsrohr 9 oder ein Teil davon bezeichnet werden.

Das Außenrohr 6 hat axial ausgerichtete Austrittsöffnungen 10 für einen zweiten Brennstoff, zum Beispiel Synthesegas. Die Begriffe axial und radial beziehen sich auf die Längsrichtung oder Rotationsachsen der beiden Rohre 5 und 6 bzw. die Strömungsrichtung S. Beide Rohre sind parallel zu der Strömungsrichtung S angeordnet.

An dem stromabwärts gelegenen Ende weist das Außenrohr 5 einen sogenannten Lobe Mixer 11 auf. Der Lobe Mixer 11 bzw. die axial ausgerichteten Austrittsöffnungen 10 düsen den Brennstoff in axialer Richtung ein, so dass eine Vermischung mit dem radial aus dem Innenrohr 5 eingedüsten Brennstoff stattfindet. Als Außenrohr 6 kann entweder ein auf ein Zuleitungsrohr 12 aufgebrachter Endbereich, der den Lobe Mixer 11 und die axial ausgerichteten Austrittsöffnungen 10 umfasst, oder der Endbereich plus Zuleitungsrohr 12 oder ein Teil davon bezeichnet werden.

Die axial ausgerichteten Austrittsöffnungen 10 verlaufen von dem äußeren Umfang des äußeren Rohrs 6 bzw. des im Umfang meist etwas reduzierten Lobe Mixers 11 bis zu einem offenen Mittelbereich 13, durch den das Innenrohr 5 geführt ist. Die axial ausgerichteten Austrittsöffnungen 10 sind mit dem Mittelbereich 13 verbunden, so dass eine in der Draufsicht sternförmige Öffnung entsteht (Figur 6). Die axial ausgerichteten Austrittsöffnungen können auch von dem Mittelbereich 13 getrennt sein.

Die axial ausgerichteten Austrittsöffnungen 10 sind zwischen in radialer Richtung eingedrückten oder tiefgezogenen Abschnitten 14 angeordnet. Die Abschnitte 14 beginnen im stromaufwärts liegenden Bereich an der äußeren Umfangsfläche und verlaufen in Richtung der stromabwärts gelegenen Stirnseite bis zu dem zentralen Mittelbereich 13.

Die Abschnitte 14 weisen an ihrem radial innenliegenden Ende oder an der Innenseite Rundungen 15 auf. Im Bereich dieser Rundungen 15 sind radiale Öffnungen oder Ausnehmungen 16 vorgesehen, welche ausgehend von der stromabwärts gelegenen Stirnseite halbkreisförmig ausgebildet sind. Diese Öffnungen 16 sind derart angeordnet, dass sie bei zusammengebauter Brennstoffdüse 2 in dem Bereich der radial ausgerichteten Austrittsöffnungen 7 liegen. So ist sichergestellt, dass bei thermischer Ausdehnung im Betrieb der Brennstoffdüse 2 der Brennstoff aus dem Innenrohr 5 ungehindert durch die radial ausgerichteten Austrittsöffnungen 7 austreten kann.

Die Brennstoffdüse 2 ist mit einer Verdrehsicherung 17 versehen, welche sicherstellt, dass das Innenohr 5 und das Außenrohr 6 nicht gegeneinander verdreht werden können, sich also stets in optimaler Position befinden, so dass die radial ausgerichteten Austrittsöffnungen 7 und die axial ausgerichteten Austrittsöffnungen 10 stets optimal zu einander ausgerichtet sind.

Die Verdrehsicherung hat einen Vorsprung oder eine Feder und eine Nut oder Ausnehmung, die ineinander greifen und so eine Verdrehung in Umfangsrichtung verhindern. Ein Teil der Verdrehsicherung 17 ist am Innenrohr 5 und der andere Teil ist am Außenrohr 6 vorgesehen.

Hier sind eine axial verlaufende Nut 18 an einer Außenfläche des Innenrohrs 5 und ein in die Nut 18 als Verdrehsicherung eingreifender Vorsprung 19 des Außenrohrs 6 vorgesehen. Der Vorsprung 19 ist zwischen zwei axialen Austrittsöffnungen 10 angeordnet und ist Bestandteil des Abschnitts 14 bzw. der Rundung 15. Der Vorsprung 19 kann auch der Rundung 15 entsprechen. Die Nut 18 ist kreissegmentförmig, wobei der Radius der Nut 18 an den Radius des Vorsprungs 19 angepasst ist. Alternativ kann der Radius des Vorsprungs 19 an den Radius der Nut 18 angepasst sein. Die Tiefe, d.h. Erstreckung in radialer Richtung, von Nut 18 und Vorsprung 19 ist derart bemessen, dass eine Verdrehung der beiden Rohre 5, 6 gegeneinander in Umfangsrichtung im Betrieb der Brennstoffdüse 2 unterbunden ist.

Die axiale Länge der Nut 18 ist größer bemessen als die axiale Länge des Vorsprungs 19, so dass auch bei thermischer Ausdehnung im Betrieb eine Zentrierung, Führung und Verdrehsicherung des Rohrs 5 gegen das Außenrohr 6 realisiert ist. Die Ausrichtung der beiden Rohre bzw. Brennstoffpassagen in Umfangsrichtung erfolgt damit automatisch.

Über den Umfang verteilt sind mehrere Nuten 18 und Vorsprünge 19 vorgesehen. In diesem Fall entspricht die Anzahl der Nuten 18 und der Vorsprünge 19 der Anzahl der Austrittsöffnungen, d.h. es sind sechs Nuten 18 und sechs Vorsprünge 19 vorgesehen. Die Anzahl der Nuten 18 und der Vorsprünge 19 kann frei gewählt werden, überschreitet jedoch nicht die Anzahl der Austrittsöffnungen.

Zwischen den Nuten 18 sind Vorsprünge oder Spitzen 20 gebildet, die in die axial ausgerichteten Austrittsöffnungen 10 eingreifen. Dies kann ebenfalls Bestandteil der Verdrehsicherung 17 sein. Alternativ ist es möglich, an dem Innenrohr 5 anstelle der Nuten Vorsprünge oder Spitzen 20 vorzusehen, welche in die axial ausgerichteten Austrittsöffnungen 10 eingreifen. Auch hier ist es möglich lediglich eine oder mehrere Spitzen 20 vorzusehen.

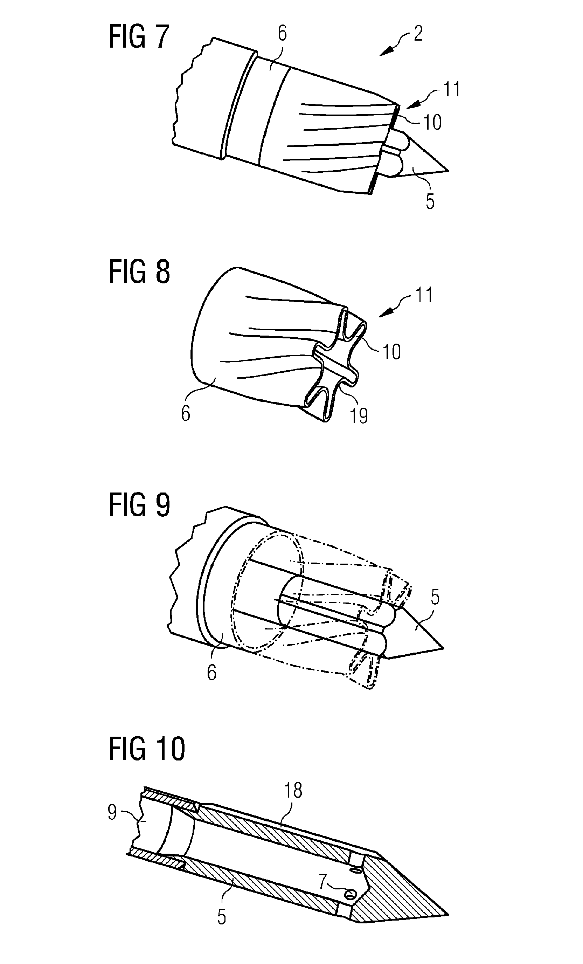

In den Figuren 7 bis 11 ist ein weiteres Beispiel einer Brennstoffdüse 2 mit Verdrehsicherung 17 gezeigt. Wie bei der in den Figuren 2 bis 6 dargestellten Brennstoffdüse ist ein Innenohr 5 mit radial ausgerichteten Austrittsöffnungen 7 und ein Außenrohr 6 mit axial ausgerichteten Austrittsöffnungen 10 vorgesehen.

Es ist ebenfalls ein Lobe Mixer 11 an dem Außenrohr 6 vorgesehen, es ist jedoch kein gerader oder so genannter Straight Lobe Mixer sondern ein verdrallter oder so genannter Twisted Lobe Mixer vorgesehen. Hier sind die axialen Austrittsöffnungen 10 in Umfangsrichtung verdrallt, so dass die axial geöffneten axialen Austrittsöffnungen 10 nicht durchgängig in axialer Richtung verlaufen, sondern eine Umfangskomponente enthalten. Das Gleiche gilt für die Abschnitte 14 zwischen den axialen Austrittsöffnungen 10 mit den Rundungen 15 bzw. den Vorsprüngen 19.

Die Nuten 18 erstrecken sich nun von einer axialen Austrittsöffnung 10 bis in eine benachbarte axiale Austrittsöffnung 10. Oder anders ausgedrückt umfasst eine Nut 18 nun einen größeren Umfangsbereich im Vergleich zu dem in den Figuren 2 bis 6 gezeigten Beispiel. Während bei der Brennstoffdüse aus den Figuren 2 bis 6 in der äußeren Umfangsfläche des Innenrohrs 5 einzelne Nuten 18 ausgenommen sind, zwischen denen sich jeweils eine Umfangsfläche befindet, reiht sich bei der Brennstoffdüse aus den Figuren 7 bis 11 eine Nut 18 direkt an eine weitere Nut 18 an. Dies erlaubt ein Einschieben des Innenrohrs 5 in das Außenrohr 6 in axialer Richtung.

Zwischen den Nuten 18 sind Vorsprünge oder Spitzen 20 gebildet, die in die axial ausgerichteten Austrittsöffnungen 10 eingreifen. Dies kann ebenfalls Bestandteil der Verdrehsicherung 17 sein. Alternativ ist es möglich, an dem Innenrohr 5 anstelle der Nuten Vorsprünge oder Spitzen 20 vorzusehen, welche in die axial ausgerichteten Austrittsöffnungen 10 eingreifen. Auch hier ist es möglich lediglich eine oder mehrere Spitzen 20 vorzusehen.

Hinsichtlich der Austrittsöffnungen 7, 10 und den Öffnungen 16, welche eine thermische Ausdehnung kompensieren, ist die Brennstoffdüse 2 der Figuren 7 bis 11 identisch oder ähnlich zu der Brennstoffdüse 2 der Figuren 2 bis 6.

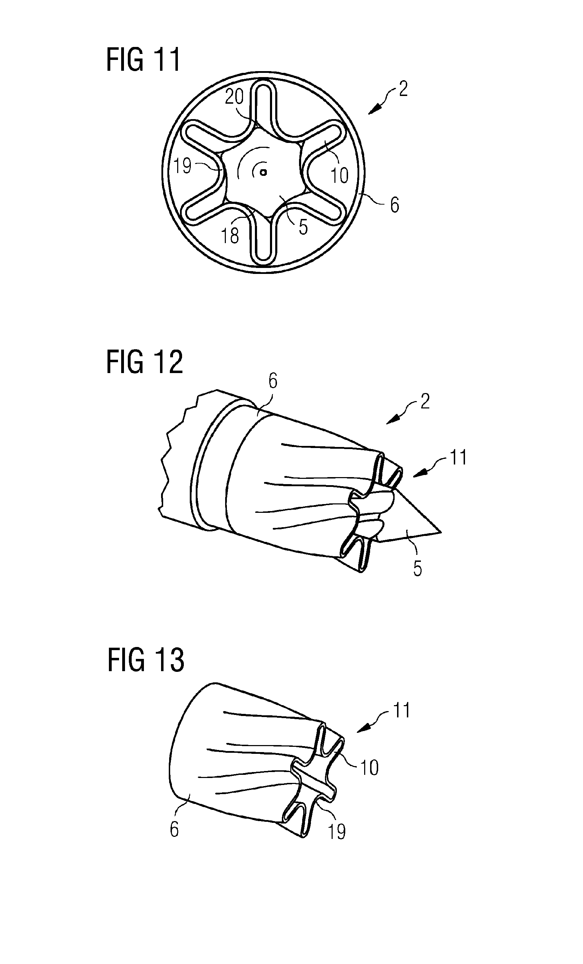

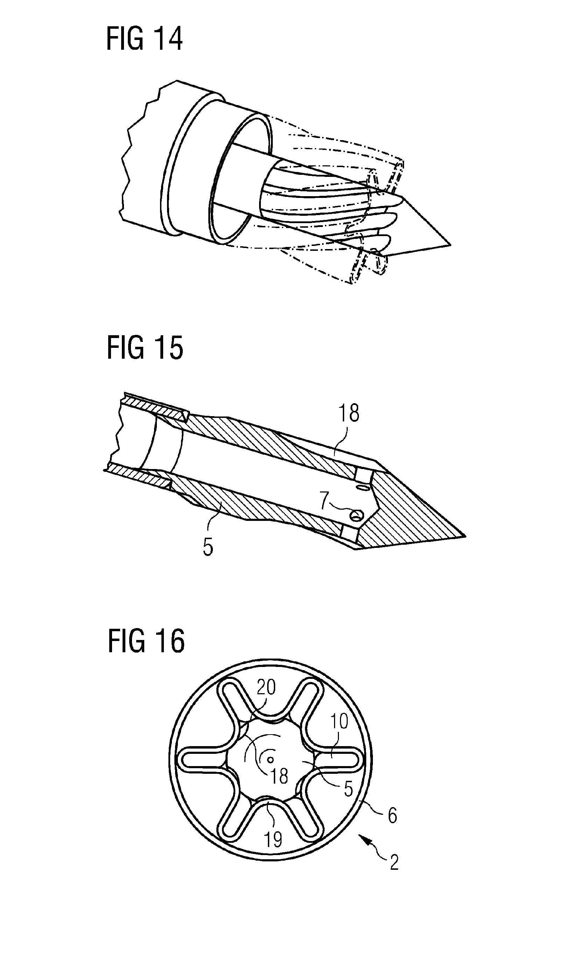

In den Figuren 12 bis 16 ist ein weiteres Beispiel einer Brennstoffdüse 2 gezeigt. Hier sind wiederum, wie in den Figuren 7 bis 11 dargestellt, die axialen Austrittsöffnungen 10 verdrallt, d.h. es wird ein verdrallter oder so genannter Twisted Lobe Mixer verwendet.

Nun sind die Nuten 18 mit identischem oder ähnlichem Drallwinkel wie die axialen Austrittsöffnungen 10 verdrallt. Ansonsten entspricht das hier gezeigte Beispiel ganz oder im Wesentlichen dem in den Figuren 7 bis 11 gezeigten Beispiel. Bei der Montage der Brennstoffdüse 2, das heißt bei dem Zusammensetzen des Innenrohrs 5 und des Außenrohres 6, wird das Innenrohr 5 gewissermaßen in das Außenrohr 6 eingeschraubt.

Zwischen den Nuten 18 sind Vorsprünge oder Spitzen 20 gebildet, die in die axial ausgerichteten Austrittsöffnungen 10 eingreifen. Dies kann ebenfalls Bestandteil der Verdrehsicherung 17 sein. Alternativ ist es möglich, an dem Innenrohr 5 anstelle der Nuten Vorsprünge oder Spitzen 20 vorzusehen, welche in die axial ausgerichteten Austrittsöffnungen 10 eingreifen. Auch hier ist es möglich lediglich eine oder mehrere Spitzen 20 vorzusehen.

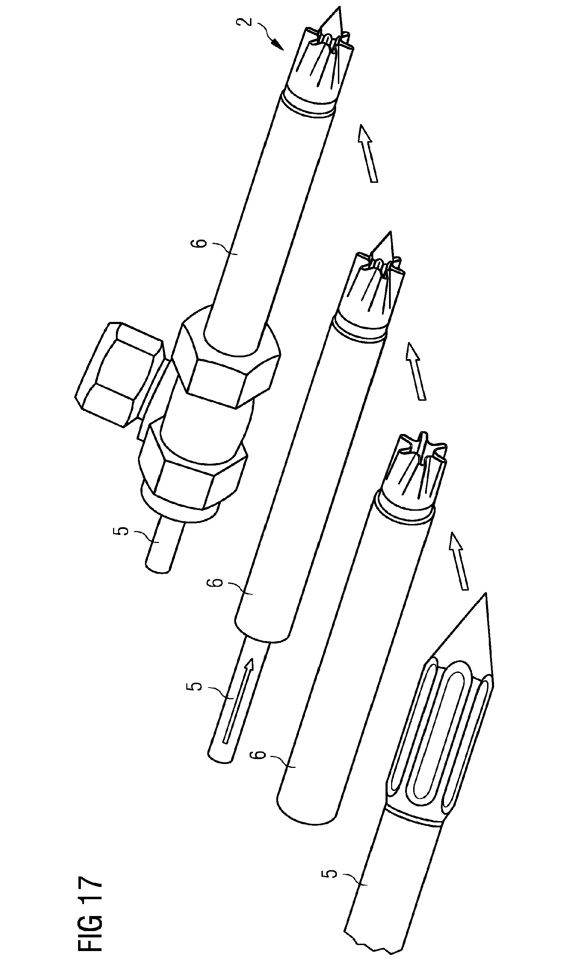

In Figur 17 ist die Montage oder der Zusammenbau der Brennstoffdüse 2 gezeigt. Nach Fertigstellung des Innenrohrs 5 (links im Bild) und des Außenrohrs 6 (einen Schritt weiter), was zum Beispiel durch Schweißvorgänge realisiert werden kann, werden die beiden Rohre 5, 6 in einem dritten Schritt ineinandergeschoben, wobei die Verdrehsicherung 17 ineinander greift, um so die Position der beiden Rohre in Umfangsrichtung zu definieren.

Danach wird der Abstand in axialer Richtung zwischen dem Innenrohr 5, bzw. den radial ausgerichteten Austrittsöffnungen 7, und dem Außenrohr 6, bzw. den radial ausgerichteten Austrittsöffnungen 7, eingestellt. Dadurch können thermische Ausdehnungen im Betrieb ausgeglichen werden.

Anschließend wird eine Verbindung zwischen den beiden Rohren 5, 6 über eine Schraubverbindung 21, wie zum Beispiel eine Rohrverschraubung, hergestellt. Danach wird die Brennstoffdüse 2 in die Gasturbine 1 eingebaut.

## Patentansprüche

1. Brennstoffdüse für zwei Brennstoffe, mit einem Innenrohr (5) mit radial ausgerichteten Austrittsöffnungen (7) für einen ersten Brennstoff und mit einem das Innenrohr (5) umgebenden Außenrohr (6) mit axial ausgerichteten Austrittsöffnungen (10) für einen zweiten Brennstoff,
**gekennzeichnet durch**
eine axial verlaufende Nut (18) an einer Außenfläche des Innenrohrs (5) und einen in die Nut (18) als Verdrehsicherung (17) eingreifenden Vorsprung (19) des Außenrohrs (6), der zwischen zwei axialen Austrittsöffnungen (10) angeordnet ist.

2. Brennstoffdüse nach Anspruch 1, wobei mehrere Nuten (18) und Vorsprünge (19) vorgesehen sind.

3. Brennstoffdüse nach Anspruch 1 oder 2, wobei die Nut (18) kreissegmentförmig ausgebildet ist und der Vorsprung (19) eine korrespondierende Rundung (15) aufweist.

4. Brennstoffdüse nach mindestens einem der Ansprüche 1 bis 3, wobei das Außenrohr (6) im Bereich der radialen Austrittsöffnungen (7) radiale Ausnehmungen (16) aufweist.

5. Brennstoffdüse nach mindestens einem der Ansprüche 1 bis 4, wobei die axialen Austrittsöffnungen (10) verdrallt sind und die Nut (19) sich von einer axialen Austrittsöffnung (10) bis in eine benachbarte axiale Austrittsöffnung (10) erstreckt.

6. Brennstoffdüse nach mindestens einem der Ansprüche 1 bis 4, wobei die axialen Austrittsöffnungen (10) verdrallt sind und die Nut (19) mit identischem oder ähnlichem Drallwinkel wie die axialen Austrittsöffnungen (10) verdrallt ist.

7. Brennstoffdüse nach mindestens einem der Ansprüche 1 bis 6, wobei eine axiale Positionierung von Innenrohr (5) zu Außenrohr (6) mittels einer Rohrverschraubung (21) erfolgt.

8. Brennstoffdüse für zwei Brennstoffe, mit einem Innenrohr (5) mit radial ausgerichteten Austrittsöffnungen (7) für einen ersten Brennstoff und mit einem das Innenrohr (5) umgebenden Außenrohr (6) mit axial ausgerichteten Austrittsöffnungen (10) für einen zweiten Brennstoff,
**gekennzeichnet durch**
einen axial verlaufenden Vorsprung (20) an einer Außenfläche des Innenrohrs (5), der in eine axial ausgerichtete Austrittsöffnung (10) als Verdrehsicherung (17) eingreift.

9. Brennstoffdüse nach Anspruch 8, wobei mehrere Vorsprünge (19) vorgesehen sind.

10. Brenner, insbesondere Strahlbrenner, aufweisend mindestens eine Brennstoffdüse (2) nach mindestens einem der Ansprüche 1 bis 9.

11. Gasturbine mit einem Brennraum (3) und einer Strömungsrichtung (S), aufweisend mindestens einen Brenner nach Anspruch 10.
